# FASCICULE DE BREVET EUROPEEN

(11) **EP 1 211 425 B1**
(45) Date de publication et mention de la délivrance du brevet: **14.02.2007**
(21) Numéro de dépôt: 01402978.9
(22) Date de dépôt: 21.11.2001
(51) Int. Cl.: F04D 29/12

(54) **Garniture monobloc d'étanchéité pour pompe à liquide de refroidissement de véhicule automobile**
Dichtungseinheit für eine Kühlmittelpumpe
Monoblock sealing unit for engine cooling pump

(30) Priorité: 29.11.2000 FR 0015407
(43) Date de publication de la demande: 05.06.2002
(73) Titulaire: CYCLAM S.A., 80038 Amiens (FR)
(72) Inventeur: Petigny, Jean-Marie, 80000 Amiens (FR)
(74) Mandataire: David, Daniel

(56) Documents cités:
- DE-A- 3 928 840
- US-A- 2 446 243
- US-A- 2 888 280
- US-A- 4 502 697
- US-A- 4 776 598
- US-A- 5 199 719

## Description

L'invention concerne une garniture monobloc pour pompe à liquide de refroidissement de véhicule automobile comme définit dans le préambule de la revendication 1. Une telle garniture est connue du document DE-A-39 28 840.

Une telle garniture est montée sur l'arbre de la turbine de la pompe et doit déjà assurer une étanchéité dynamique autour de l'arbre.

La garniture est également montée dans le couvercle de la pompe fixé sur le corps de pompe, au niveau duquel elle doit aussi assurer une étanchéité statique.

La garniture monobloc comporte un boîtier externe agencé pour s'emboîter dans le couvercle de pompe, avec une paroi parallèle à l'axe de la garniture, pour s'emboîter dans le couvercle de pompe, et un rebord transversal prolongeant intérieurement la paroi axiale, pour s'appuyer contre le couvercle de pompe, un cordon d'étanchéité entourant la paroi axiale pour assurer l'étanchéité entre la garniture et le couvercle de pompe. Il peut s'agir d'un cordon en un matériau de la marque protégée Curil, un cordon de colle, ou encore un cordon à base de PTFE.

Les différents types de cordon ne permettent plus d'assurer totalement l'étanchéité actuellement requise par le marché. En effet, à cause du montage par serrage, la matière du cordon d'étanchéité se répartit de manière aléatoire entre le boîtier et le couvercle de pompe, au risque donc de ne plus assurer une parfaite étanchéité.

L'invention vise à proposer une garniture à étanchéité statique perfectionnée.

A cet effet, l'invention concerne une garniture monobloc d'étanchéité pour pompe à liquide de refroidissement de véhicule automobile comprenant un boîtier externe, avec une paroi s'étendant parallèlement à un axe de garniture, entre un fond antérieur et un rebord postérieur prolongeant la paroi axiale, le boîtier étant destiné à être emboîté dans un couvercle de pompe, par la paroi axiale, et à prendre appui contre le couvercle de pompe, par le rebord, garniture caractérisée par le fait que le rebord postérieur du boîtier est recourbé sur lui-même vers l'avant en ménageant un espace sensiblement torique dans lequel est prévu un joint torique d'étanchéité par l'intermédiaire duquel le rebord postérieur peut prendre appui contre le couvercle de pompe ledit joint torique étant ainsi maintenu latéralement écrasé en compression axiale contre le couvercle de pompe ce qui assure une étanchéité statique.

L'étanchéité statique de la garniture de l'invention est assurée par un joint torique disposé dans un espace suffisant.

La mise en place de la garniture, à l'aide d'un outil poussoir adapté avec butée, permet d'assurer une compression contrôlée du joint torique. Le léger jeu entre le couvercle de pompe et la partie antérieure du rebord postérieur évite des aléas de mise en place dûs aux éventuelles imperfections de découpage du boîtier.

La cote axiale, entre le fond antérieur du boîtier et la partie antérieure du rebord postérieur peut être préservée pour maintenir, sous l'action d'un ressort, la charge de compression de la garniture, tout en préservant globalement aussi les dimensions radiales de la garniture.

Dans la forme de réalisation préférée de la garniture de l'invention, l'extrémité du rebord postérieur comporte une lèvre annulaire recourbée transversalement à l'axe de la garniture pour ne pas risquer d'endommager le joint d'étanchéité.

L'invention sera mieux comprise à l'aide de la description suivante de la forme de réalisation préférée de la garniture, en référence au dessin annexé, sur lequel
- la figure 1 représente une demi-vue en coupe axiale d'une garniture d'étanchéité de l'art antérieur;
- la figure 2 représente une vue en coupe axiale, à plus petite échelle, du boîtier externe de la garniture de l'invention et
- la figure 3 représente une vue en coupe axiale, à plus grande échelle, d'une portion périphérique, avec sa lèvre d'appui, du boîtier externe de la garniture de l'invention, avec le joint torique d'étanchéité.

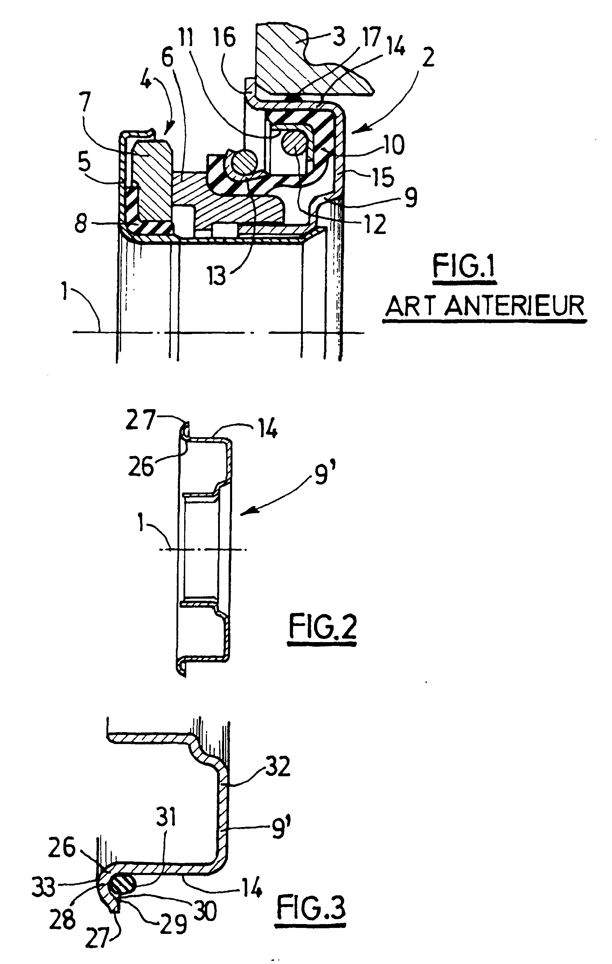

En référence à la figure 1, une garniture monobloc classique de l'art antérieur, d'axe 1,comporte une partie externe 2, destinée à assurer une étanchéité statique avec un couvercle de pompe 3, et une partie interne 4, destinée à assurer une étanchéité dynamique avec l'arbre de turbine du corps de pompe, non représenté, mais de même axe 1 que la garniture.

Pour mémoire, la partie interne "dynamique" de la garniture comporte une chemise de conditionnement 5, une contrebague 7 et un jonc 8.

La partie externe 2 d'étanchéité statique comporte une rondelle de frottement 6, un boîtier externe 9, une membrane 10, un anneau de membrane 11, un ressort 12 et un anneau de ressort 13. Le boîtier 9 comporte une paroi périphérique 14 s'étendant parallèlement à l'axe 1, entre un fond antérieur 15 et un rebord postérieur 16. Le rebord 16 est un rebord transversal, orthogonal à l'axe 1, prolongeant extérieurement la paroi périphérique axiale 14. Le boîtier 9 est emboîté dans le couvercle de pompe 3, par sa paroi périphérique axiale 14, et prend appui contre le couvercle de pompe 3, par son rebord 16. Un cordon d'étanchéité 17 entoure la paroi périphérique 14 pour assurer l'étanchéité statique entre la garniture et le couvercle 3.

La garniture de l'invention (figures 2, 3) ne se distingue de celle de l'art antérieur que par la périphérie du boîtier externe 9'.

La paroi périphérique 14, parallèle à l'axe 1, est prolongée par un rebord postérieur 26 recourbé sur lui-même vers l'avant en arc de cercle, ici sur environ 180°, avec une portion d'extrémité en forme de lèvre annulaire 27. La lèvre annulaire 27 est recourbée transversalement à l'axe 1 de la garniture, sur sensiblement 90° par rapport à la partie adjacente 28 du rebord postérieur 26, pour s'étendre globalement dans un plan 29 transversal à l'axe 1. Le rebord postérieur recourbé 26 ménage un espace 30 sensiblement torique. Un joint torique d'étanchéité 31 est disposé dans cet espace 30. La lèvre annulaire 27 est recourbée pour ne pas risquer d'endommager le joint 31.

Après emboîtement du boîtier 9' dans le couvercle de pompe 3, et le joint torique 31 étant resté maintenu dans l'espace 30 du rebord 26, le rebord 26, par l'intermédiaire du joint 31, prend appui contre le couvercle de pompe 3.

Le joint torique 31, maintenu latéralement, est ainsi écrasé contre le couvercle de pompe 3, ce qui assure une excellente étanchéité statique.

Ainsi, le rebord postérieur ne vient pas en contact direct avec le corps de pompe. Au montage, on utilise un outillage qui vient en butée contre le corps de pompe de telle manière qu'il reste un jeu entre la lèvre annulaire et le corps de pompe. Ce jeu est rattrapé par le joint torique qui est en compression. Cette disposition permet de maîtriser et de reproduire en série la valeur de compression du joint indépendamment des tolérances de mise en oeuvre des composants du produit.

On remarquera que la cote axiale, entre le fond antérieur 32 du boîtier 9' et la surface postérieure 33 de la partie de rebord 28, peut rester sensiblement identique à la cote correspondante du boîtier 9 de la garniture de l'art antérieur.

## Revendications

1. Garniture monobloc d'étanchéité pour pompe à liquide de refroidissement de véhicule automobile comprenant un boîtier externe (9'), avec une paroi (14) s'étendant parallèlement à un axe (1) de garniture, entre un fond antérieur (32) et un rebord postérieur (26) prolongeant la paroi axiale (14), le boîtier (9') étant destiné à être emboîté dans un couvercle de pompe (3), par la paroi axiale (14), et à prendre appui contre le couvercle de pompe (3), par le rebord (26), garniture **caractérisée par le fait que** le rebord postérieur (26) du boîtier (9') est recourbé sur lui-même vers l'avant en ménageant un espace (30) sensiblement torique dans lequel est prévu un joint torique d'étanchéité (31) par l'intermédiaire duquel le rebord postérieur (26) peut prendre appui contre le couvercle de pompe (3) ledit joint torique (31) étant ainsi maintenu latéralement écrasé en compression axiale contre le couvercle de pompe (3), ce qui assure une étanchéité statique.

2. - Garniture monobloc d'étanchéité selon la revendication 1, dans laquelle l'extrémité du rebord postérieur (26) comporte une lèvre annulaire (27) recourbée transversalement à l'axe (1) de la garniture.

## Claims

1. Monobloc sealing unit for an automotive vehicle coolant pump comprising an external housing (9'), having a wall (14) which extends parallel to a unit axis (1), between a front base (32) and a rear shoulder (26) which extends the axial wall (14), the housing (9) being intended to be inserted into a pump cover (3) via the axial wall (14) and to abut against the pump cover (3) via the shoulder (26), unit **characterised in that** the rear shoulder (26) of the housing (9') is bent back on itself towards the front, providing a space (30) which is substantially toric and in which there is provided a toric seal (31), by means of which the rear shoulder (26) can abut against the pump cover (3), said toric joint (31) thus being maintained compressed laterally under axial compression against the pump cover (3) which ensures static sealing.

2. Monobloc sealing unit according to claim 1, in which the end of the rear shoulder (26) comprises an annular lip (27) bent transversely to the axis (1) of the unit.

## Patentansprüche

1. Dichtungseinheit für Kfz-Kühlmittelpumpe, aufweisend ein Außengehäuse (9') mit einer parallel zu einer Dichtungsachse (1) verlaufenden Wand (14) zwischen einem vorderen Boden (32) und einer hinteren Krempe (26), die die axiale Wand (14) verlängert, wobei das Gehäuse (9') mit der axialen Wand (14) zum Einsetzen in einen Pumpendeckel (3) und mit der Krempe (26) zum Abstützen an dem Pumpendeckel (3) vorgesehen ist, wobei die Dichtung **dadurch gekennzeichnet ist, dass** die hintere Krempe (26) des Gehäuses (9') nach vorn auf sich selbst umgebogen ist, unter Bildung eines im wesentlichen torischen Raums (30), in welchem ein Dichtungsring (31) vorgesehen ist, durch dessen Zwischenschaltung die hintere Krempe (26) an dem Pumpendeckel (3) abstützbar ist, wobei der Dichtungsring (31) auf diese Weise seitlich gehalten unter axialem Druck gegen den Pumpendeckel (3) gepresst wird, wodurch eine statische Dichtheit sichergestellt ist.

2. Dichtungseinheit nach Anspruch 1, wobei der Rand der hinteren Krempe (26) eine quer zur Achse (1) der Dichtung gebogene Ringlippe (27) aufweist.
